# EUROPEAN PATENT APPLICATION

(11) **EP 2 273 406 A1**
(43) Date of publication of application: **12.01.2011**
(21) Application number: 09305612.5
(22) Date of filing: 29.06.2009
(51) Int. Cl.: G06F 21/00, H04N 5/765

(54) **Portable video storage device**

(71) Applicant: Thomson Licensing, 92130 Issy-les-Moulineaux (FR)
(72) Inventor: Theis, Oliver, 30655 Hannover (DE); Georgi, Marco, 30855 Langenhagen (DE)
(74) Representative: Thies, Stephan

(57) **Abstract**

The present invention relates to a storage device containing at least video data content in a compressed format. The storage device includes a dedicated decoder (3) for the respective compressed data content, a video data output connector (4) for providing uncompressed video data to a display device (5) and it is realized on a portable stick (1).

## Description

The present invention relates to a storage device containing at least video data in a compressed format, e.g. an MPEG format.

Currently known most important storage media for video data are DVD disc and Blue-ray disc. Video data, and also audio or other data, are stored in a compressed format on the disc. The compressed data is known also as coded data. State of the art digital Video Compression algorithms usually try to optimize the trade-off between quality, e.g. resolution, noise, artefacts, etc. and the size of the compressed video. On the other hand, compressed video and audio data are also transmitted by broadcasting station.

Transmission bandwidth, e.g. via DVB or Internet, or storage capabilities, e.g. on an optical disc (50 GB dual layer Blue-ray disc size, 8.5 GB dual layer DVD size) put constraints on the allowable maximum size of the compressed data and, therefore, on the encoding algorithm. Further, quality is adjusted to the capabilities of a given decoder platform. Recently, signal processing power of ICs has increased, thereby allowing to increase video quality using more sophisticated algorithms. This leads to a larger chip size and a higher power consumption of the decoding chips.

A further reason for the increased amount of decoder hardware requirements are stronger content encryption schemes that require even more decryption logic for decoding, which also increases the power dissipation of the decoder hardware.

This led to the fact that current Blu-ray or HD-DVD players consume as much power as an Office PC. On the other hand, state of the art PC hardware is not capable to play back Blu-ray or HD-DVD discs without employing dedicated hardware for decoding.

On the other hand, the price for flash memory is falling steadily and future successors (phase change random access memory (PCRAM), magnetic random access memory (MRAM) etc.) will likely be even cheaper at higher data capacities and interface speed. The recent development of flash disc is shown in "Boi Feddern and Benjamin Benz, Überflieger - Solid State Disks für den Massenmarkt (High-flyer - Solid State Discs for the mass market), c't - Magazin für Computertechnik, pages 122 ff." It is anticipated that there will be further nonvolatile storage media, e.g. PCRAM, MRAM of flash itself, offering storage capacities even larger than today's optical discs at a comparable price of an optical disc. Further, all known today's storage media, e.g. optical media, allow direct access to the coded video data. There exist copy protection algorithms, but they do not prevent the access of raw data of a disc.

W02005/032115 shows a portable video playback device, including an MPEG video encoder/decoder, providing a number of interfaces. Video files are stored in the device and can be used at convenient locations. The device offers a security mechanism that prevents unauthorized play back.

It is an object of the present invention to provide a storage device containing encoded video data which dramatically reduces the computational effort of the playback device. It is a further object of the invention to provide a storage device containing encoded video data with increased content protection.

According to the invention, the storage device includes a dedicated decoder. The decoder is not just usable for content compressed according to a certain standard, as e.g. MPEG2, but it is optimized for decoding the compressed data content that is actually stored on the storage device. The storage device further includes a video data output connector for providing the uncompressed video data to a display device. The whole storage devices is realized in a portable manner, e.g. on a portable storage stick. This has the advantage that the portable video stick can be connected in a direct manner to the display device via the output connector. The need for a connection cable is omitted. There is no need for a decoding means in the display device or in a separate playback device. The decoding means for the encrypted video content is already included into the portable stick. The decoding means in the portable stick is a dedicated decoder. This has the advantage that uncompressed video data are provided at the output connector, which can be displayed by a display device without the knowledge of the coding and compression algorithm and without the necessity to provide a decoder capable of decoding the specific algorithm used for the video data. Storage devices with an integrated decoder according to the invention are advantageous compared to general decoding devices, which are capable to decode different video formats, different compression rate and which are used for different algorithm. These general decoding devices have higher power dissipation and have lower performance compared to a dedicated decoding means. The decoder hardware of a dedicated decoding means can be produced more cost efficiently. The storage (and playback medium) is a small and handy device.

Favourably, the decoder is optimised for decoding and playing back the specific video data with regard to its characteristics, e.g. to the compression format, the compression rate and the error correction coding. As a further advantage, video content, which is not in full conformity to a standard, can be stored on the storage device and provided to the end user, because the necessary decoder for decoding the video data is already included. The dedicated decoder is thus adapted to the specific content to be decoded, e.g. by not being able to perform some optional features of the standard that are not used in the specific content. Also mandatory features of a coding/compression standard that are not used in the specific content are not supported by the dedicated decoder. A dedicated decoder e.g. displays no B-pictures of an MPEG data stream. Alternatively, the video content is stored in an uncompressed format on the storage medium and the dedicated decoder handles providing the data to the output connector. No interaction with a general playback device is necessary, therefore there is no need to have data that is in full conformity to the standard. Uncompressed data is provided at the interface of the storage device and the uncompressed data can be displayed by any display device.

Preferably, the storage device prohibits accessing an input connector during providing the uncompressed video data to the display device. The storage device may have an input connector which is only accessible by the video content provider for storing the video data on the storage devices. The compressed video data is therefore not accessible by the end-user. Content protection is realised in this manner. This is advantageous compared to known devices, where compressed data are accessible and unauthorised copying is easier compared to the inventive device.

Advantageously, the video data output connector is a broadband digital connector. A broadband connector has the advantage that enough bandwidth is available to provide uncompressed video data to the display device. As an example, a HDMI connector is used as a digital broadband connector. Each other digital connection system, e.g. Display Port or DVI, might be used for this purpose.

Favourably, the video data output connector being connected directly to the display device. No intermediate devices are needed. The moveable stick is attachable directly to the display device. Favourably, no cable is needed for establishing the connection. Operating the storage means is, e.g. realized by the remote control of the display device or by some operating means included in the storage device.

Preferably, the video data output connector interface provides secure connection to the display device. This has the advantage that no unauthorized access to the uncompressed data is provided and content protection is enhanced. For example, HDMI features secure connections.

Advantageously, power supply for the storage device is realized via the data output connector. This has the advantage that no additional connector is needed. Power supply is available as soon as the storage device is connected to a display device, which means in any case a play back operation is performed by the storage device. An external power supply circuit is not needed. This feature is known, e.g. from today's USB connections. Alternatively, the storage device contains a battery which allows play back of the stored content for at least once. Advantageously, the battery provides energy for play back of the whole video content for a certain number of times, e.g. for 2 or 3 times. In case of a video rental shop, the rental fees of a storage device containing the video data is not charged according to a certain time the video is borrowed. Contrary, the rental fees are charged according to the maximal number of playbacks of the movie, which are allowed according to the battery power. In the video shop, the battery is charged before the storage device is lent the next time. Alternatively, a counter is implemented in the storage device. The counter monitors the number of playbacks and a playback inhibitor blocks play back, if the maximal number of allowed playbacks is reached. Therefore, the playback inhibitor is connected to an output of a counter. In another advantageous manner, the content is erased or locked when the plug has not been used for a certain time as soon as the stick is powered the next time.

Preferably, the storage device contains one or multiple different movies as compressed video data. Advantageously, it contains a further means for detecting and storing which movie has been played back. Solely playing back the trailer of a movie is not stored as playing back the movie. At the moment, the storage device is returned to the video store, the memory is read and the movies that in fact have been viewed are billed. This has the advantage that a video store can distribute all new movies released for example within one week or one month and the costumer has only to pay for the movie he actually viewed.

For better understanding the invention shall now be explained in more detail in the following description with reference to the figures. It is understood that the invention is not limited to this exemplary embodiment and that specified features can also expediently be combined and/or modified without departing from the scope of the present invention.
Fig. 1 shows a storage device according to the invention in a first embodiment
Fig. 2 shows a storage device according to the invention in a second embodiment
Fig. 3 shows a display device ready for connecting a storage device according to the invention

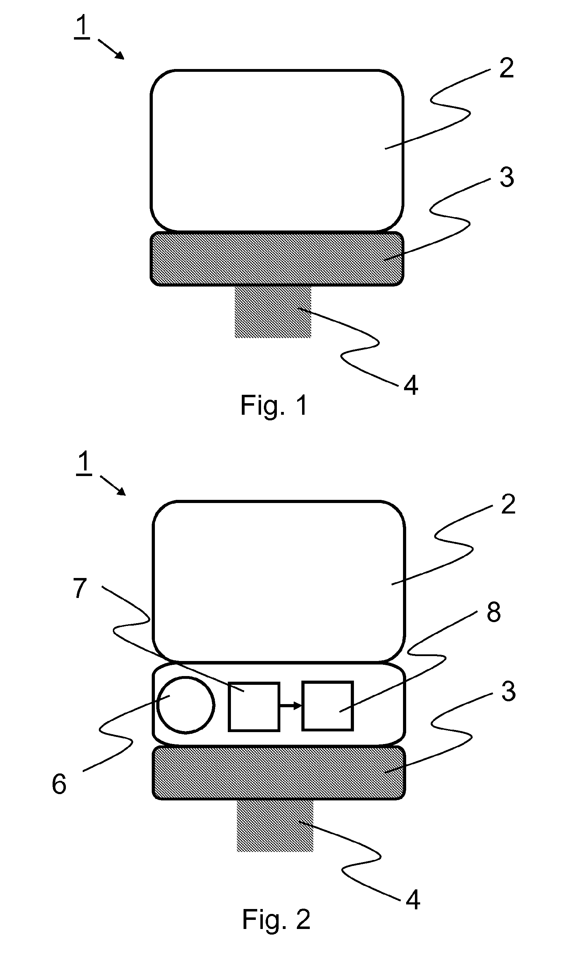

Fig. 1 and shows the storage device which is realised as a portable stick 1, comprising a content storage 2, a player 3 and a connector 4. Therefore, the portable stick 1 combines content storage 2 and player 3 in a single device in form of a stick 1. The portable stick 1 further comprises a plug 4, e.g. an HDMI plug or other future standard video interface. In one embodiment of the invention, the device is powered through the plug. Even this is not an HDMI feature today, future broadband video interfaces will provide power supply mechanisms, as it is realised e.g. in the USB standard today. An internal power supply circuit is omitted. Therefore, the device is a Player&Disc replacement and combines the content storage 2 with a dedicated player 3. The output signal is provided via a connection means, here plug 4, which provides an uncompressed video signal directly to the external TV or display device. The content storage device 2 is a nonvolatile storage medium, possibly a successor of flash technology like Phase Change Random Access Memory, Magnetic RAM or flash itself. Depending on the capacity of such a storage device 2, the constraints regarding video-compression algorithms are reduced. This further reduces the signal processing effort on the player 3 side and thereby lowers the power consumption. Operation of the portable stick 1 via a low voltage external power supply is sufficient. Content stored in the content storage 2 is rewritable or single time programmable either via the plug 4 or any other secure encrypted interface.

Fig. 2 shows the storage device which is realised as a portable stick 1 in another refinement. Same features as in Fig. 1 are named with the same reference signs. A detailed description of these features is omitted. In addition, the portable stick 1 comprises a battery 6 for operation of the device. The battery provides sufficient power for playing back the stored content at least once. In addition or alternatively, the portable stick is equipped with a playback inhibitor 8, which suppresses play back of the video content. This playback inhibitor might be connected to the output of a counter 7, which counts the number of times the content was already played back. After the maximum number of playbacks is exceeded the playback inhibitor 8 suppresses further play back of the video content. The playback inhibitor 8 might be unlocked by a secure connection in the video rental shop. The playback inhibitor 8 might also lock play back or operation of the portable stick 1 in case an unauthorized access on the content storage 2 was detected.

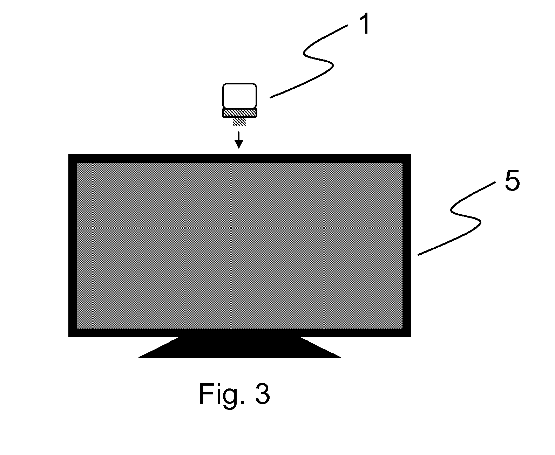

Fig. 3 depicts a video display device 5, e.g. an LCD TV or a plasma TV or any other display device having an interface for receiving uncompressed video data which is compatible to the connection means 4 of the portable stick 1. Video play back performed by the player 3 of the portable stick 1 is controlled via the display 5 remote control. This feature can be realized, e.g. via the CEC channel of the HDMI connector 4.

## Claims

1. Storage device containing at least video data content in a compressed format, **characterized in that** the storage device includes a dedicated decoder (3) for the respective compressed data content and a video data output connector (4) for providing uncompressed video data to a display device (5) and **in that** the storage device is realized on a portable stick (1).

2. Storage device according to claim 1, **characterized in that** the dedicated decoder (3) is optimized for play back of the compressed video content concerning compression rate and/or data format.

3. Storage device according to claim 1 or 2, **characterized in that** the storage device has means for prohibiting accessing an input connector during providing the uncompressed video data to the display device (5).

4. Storage device according to one of claims 1 to 3, **characterized in that** the video data output connector (4) is a broadband digital connector.

5. Storage device according to one of claims 1 to 4, **characterized in that** the video data output connector (4) is connected directly to the display device (5).

6. Storage device according to one of claims 1 to 5, **characterized in that** the video data output connector (4) interface provides secure connection to the display device (5).

7. Storage device according to one of claims 1 to 6, **characterized in that** the storage device is supplied with power via the video data output connector (4).

8. Storage device according to one of claims 1 to 6, **characterized in that** the storage device is provided with a battery (6) which allows play back of the stored content for at least once.

9. Storage device according to one of claims 1 to 8, **characterized in that** the storage device is provided with a playback inhibitor (8).

10. Storage device according to claim 9, **characterized in that** the playback inhibitor (8) is connected to an output of a counter (7).

11. Storage device according to one of claims 1 to 9, **characterized in that** the compressed data content are multiple movies.

12. Storage device according to claim 11, **characterized in that** it includes a billing means for storing which movie has been viewed.
